# EUROPEAN PATENT APPLICATION

(11) **EP 1 160 637 A1**
(43) Date of publication of application: **05.12.2001**
(21) Application number: 00111663.1
(22) Date of filing: 31.05.2000
(51) Int. Cl.: G04G 5/00, G06F 1/30

(54) **Check for plausibility of time information provided by real time clock of a mobile terminal**

(71) Applicant: Sony International (Europe) GmbH, 10785 Berlin (DE)
(72) Inventor: Badtke, Rainer, Sony International (Europe) GmbH, 85609 Aschheim (DE)
(74) Representative: Körber, Martin, Dipl.-Phys.

(57) **Abstract**

A method of checking the plausibility of time information provided by a battery backed up real time clock (RTC) in a mobile terminal of a wireless telecommunication system is disclosed in which a time information of the real time clock is stored in a non-volatile memory means (NVM) during operation of the mobile terminal, the method comprising the steps of:
- reading (S2) the time information stored in the non-volatile memory means;
- comparing (S3) the time information read from the non-volatile memory means with a present time information output from the real time clock; and
   deciding (S4) on the basis of the comparison result, whether the time information supplied by the real time clock is valid.

## Description

The present invention relates to a method of checking the plausibility of time information provided by a battery backed up real time clock (RTC) in a mobile terminal of a wireless telecommunication system and to a corresponding mobile terminal.

A typical mobile terminal is adapted for communication in a wireless communication system e.g. the GSM or the UMTS system. The mobile terminal either communicates directly with another portable terminal or with a base station of the wireless communication system. Typical transmission standards are e.g. DECT for in-house systems and GSM or UMTS for global telecommunication systems.

During recent years, mobile terminals have become more and more complex and at present almost every mobile terminal on the market comprises a real time clock (RTC) for generating a real time information to be displayed or to be used in combination with other features of the mobile terminal.

Real time clocks providing real time information on the basis of a low frequency oscillation signal are known in many different variations. With these systems the time information usually is provided by a count number. For example, real time clocks can be quartz devices operating in the low frequency range of e. g. several kHz. Such devices usually have an accuracy of only 50 ppm, which leads to an inaccuracy of 130 seconds per month. On the other hand, these quartz devices are cheap and consume very little energy compared to highly accurate time base systems. The high level of inaccuracy, however, is not acceptable for consumer applications. In order to improve the accuracy, normally either selected quartz devices are used or the frequency offset is measured during the manufacturing process and stored in the system. During normal operation this offset is used to compensate the frequency error.
Normally, the RTC is battery powered by the supply battery of the mobile terminal even if the mobile terminal is switched off. After the mobile terminal supply battery has been removed from the mobile terminal or after the mobile terminal supply battery has gone flat, i.e. the battery voltage has dropped below a certain level necessary for the operation of the mobile terminal, the time information provided by the above described RTC is lost due to the volatile nature of the RTC. To avoid loss of time information when the mobile terminal supply battery is changed, an additional back up battery for the RTC is often provided with the mobile terminal. Such an additional back up battery is usually capable of running the RTC for about several minutes to a few hours. As the size (and the price) of the back up batteries increases with their capacity and space is always very rare in miniaturised modern mobile terminals, the capacity of the back up battery is normally limited to the minimum requirements.

A method of determining the condition of a back up battery for a real time clock is disclosed by US 5,596,512.

Referring back to the above, the time information provided by the RTC of a mobile terminal might be lost if the mobile terminal supply battery has been removed or gone flat for a time duration exceeding the capacity of the back up battery. In this case, when the power supply is restored (the mobile terminal supply battery is reloaded or an external power supply is connected to the mobile terminal) and the mobile terminal is re-booted, there are various possibilities:
A) The RTC is reset to a predetermined value (e.g. "January 01, 1900, 00.00") and restarted;
B) A random value is erroneously displayed;
C) An obsolete time information stored in a non-volatile memory (NVM) might be displayed

As the mobile terminal according to the prior art is not capable of checking the plausibility of the time information provided by a real time clock, a wrong time information might be outputted to a display and/or a date noted in an organiser included in the mobile terminal might be missed.

It is therefore the object of the present invention to provide a method of checking the plausibility of time information provided by a battery backed up real time clock (RTC) in a mobile terminal of a wireless telecommunication system and a corresponding mobile terminal of a wireless telecommunication system, which allow a check of the plausibility of time information outputted from the real time clock.

The invention is defined in the independent claim. Further developments are set forth in the dependent claims.

The above object is achieved by a method of checking the plausibility of time information provided by a battery backed up real time clock (RTC) in a mobile terminal of a wireless telecommunication system according to claim 1 in which a time information of the real time clock is stored in a non-volatile memory means (NVM) during operation of the mobile terminal, the method comprising the steps of:
- reading the time information stored in the non-volatile memory means and
- comparing the time information read from the non-volatile memory means with a present time information outputted from the real time clock to decide whether the time information supplied by the real time clock can be regarded as valid.
The above object is further achieved by a mobile terminal according to claim 9, which comprises
- a battery backed up real time clock providing a time information which is stored in a non-volatile memory means during operation of the mobile terminal,
- reading means for reading the time information stored in the non-volatile memory means;
- comparing means for comparing the time information read from the non-volatile memory means with a present time information output from the real time clock; and
- deciding means for deciding on the basis of the comparison result, whether the time information supplied by the real time clock is valid.

As an accurate time information of the RTC is stored in the NVM, a comparative value for the RTC can always be provided.
As the plausibility of time information outputted from the RTC is checked, wrong time information supplied by the RTC due to both a loss of time information and an error can be determined.

Advantageously, if the time information read from the real time clock is smaller in value than the time information read from the non-volatile memory means, the time information supplied by the real time clock is regarded as invalid.
Therefore it can easily be decided whether the time information outputted from the real time clock is plausible or an error must have occurred in the mobile terminal as, during normal operation, the time information stored in the NVM can never be larger than the accurate time information supplied by the RTC. With this method, it is possible to determine a reset of the RTC to a predetermined obsolete value (e.g. "January 01, 1900, 00.00"), too.

Furthermore, if the time information read from the real time clock is larger in value than the sum of the time information read from the non-volatile memory means and a predetermined best case back up time, the time information supplied by the real time clock is regarded as invalid.
This maximum time limit guarantees within certain limits that, for example, a larger random value erroneously displayed by the RTC due to a loss of information can be detected.

Advantageously, the best case back up time is the time during which the real time clock drains a mobile terminal supply battery.
As it is impossible to run the RTC without any power supply, and normally the mobile terminal would not be connected to a stationary power supply for months, the time information supplied by the RTC must be wrong if it does exceed the sum of time information stored in the NVM and a thus determined best case back up time.

To avoid inconvenience to the user it has been found to be further advantageous for the fact that the time information supplied by the real time clock is regarded as invalid to be signalised to a user of the mobile terminal.

To guarantee that an accurate, actual and reliable time information is stored in the non-volatile memory means, the time information of the real time clock should be periodically stored in a non-volatile memory means during operation of the mobile terminal.

Furthermore, it is very advantageous if the time information of the real time clock is stored in the non-volatile memory means before normal shutdown of the mobile terminal as the most actual time information is provided in the non-volatile memory means by this measure.

In the following description, a preferred embodiment of the present invention is discussed in detail in relation to the enclosed drawings, in which
Figure 1 shows a flow chart for explaining the method according to the invention
Figure 2 shows step S4 of the flow chart shown in fig. 1 in more detail
Figure 3 shows a block diagram of a mobile terminal according to the invention.

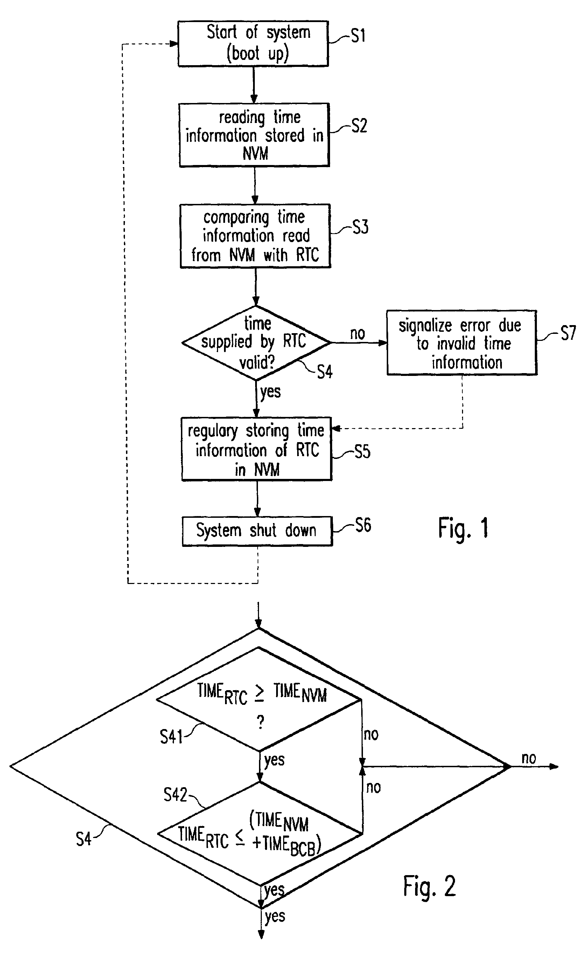

Figure 1 shows a flow chart of a method according to the present invention.

As in step S1 a mobile terminal is switched on by a user, said mobile terminal is booted up. When booting up a mobile terminal, different system parameters may be checked and a self test of the mobile terminal may be conducted.

When the mobile terminal has been started, time information stored in a non-volatile memory means NVM is read in step S2.

During the following step S3, the time information TIME_{NVM} read from the NVM is compared with the time information TIME_{RTC} supplied from the real time clock RTC.

Afterwards it is decided whether the time information TIME_{RTC} supplied by the RTC is to be regarded as valid (step S4).
This crucial step is shown in more detail in Fig. 2:

Firstly, if in step S41 the time information TIME_{RTC} supplied by the RTC is judged to be smaller / earlier in date than the time information TIME_{NVM} supplied by the NVM, i.e. TIME_{RTC} < TIME_{NVM}, the time information supplied by the RTC is deemed to be invalid and the method proceeds to step S7.
Otherwise, if in step S41 the time information TIME_{RTC} supplied by the RTC is judged to be bigger / later in date than or equal to the time information TIME_{NVM} supplied by the NVM, (TIME_{RTC} ≥ TIME_{NVM}) the method proceeds to step S42.

Secondly, if in step S42 the time information TIME_{RTC} supplied by the RTC is judged to be bigger / later in date than the sum of the time information TIME_{NVM} supplied by the NVM and a so-called "best case back up time" TIME_{BCB,}, (TIME_{RTC} > [TIME_{NVM} + TIME_{BCB}]), the time information TIME_{RTC} supplied by the RTC is decided to be invalid and the method proceeds to step S7.
If in step S42 the time information TIME_{RTC} supplied by the RTC is judged to be smaller / earlier in date than or equal to the sum of the time information TIME_{NVM} supplied by the NVM and the "best case back up time" TIME_{BCB} (TIME_{RTC} ≤ [TIME_{NVM} + TIME_{BCB}]), the time information TIME_{RTC} supplied by the RTC is deemed to be valid and the method proceeds to step S5.

Said "best case back up time" TIME_{BCB} can be calculated based on the fact that the RTC and possibly other components of the mobile terminal also drain the mobile terminal supply battery when the mobile terminal is switched off. Besides this, self-discharge of the mobile terminal supply battery and the back up battery occurs. Given these facts, a "best case back up time" TIME_{BCB} duration can be calculated, determined or detected, during which a RTC will be in working order if the mobile terminal supply battery has been loaded completely and the mobile terminal is switched off.

As the steps S41 and S42 are performed one after the other, the time information TIME_{RTC} supplied by the RTC is only regarded as being plausible if it is between the time information TIME_{NVM} stored in the NVM and the sum [TIME_{NVM} + TIME_{BCB}] of the time information TIME_{NVM} stored in the NVM and a predetermined "best case back up time" TIME_{BCB}. Therefore it is possible to decide reliably whether the time information TIME_{RTC} supplied by the RTC is plausible or not.
It can be easily understood that the order of steps S41 and S42 can be changed without amending the function of the invention.

In step S5 shown in Fig. 1 the time information TIME_{RTC} supplied by the RTC is regularly (for example every minute, every hour, every time the mobile terminal is shut down) stored in the NVM to determine a new TIME_{NVM} value. It is preferable for the time information TIME_{RTC} supplied by the RTC to be stored at least every hour to guarantee the function of the inventive method even if an unexpected shut down of the mobile terminal due to an error occurs or if the mobile terminal supply battery is removed during operation of the mobile terminal.

In step S6, the mobile terminal is shut down due to an error or an operation of the user. Afterwards the inventive method described above restarts in step S1 when the mobile terminal is booted up again.

If the time information TIME_{RTC} supplied by the RTC is adjudged to be invalid in step S4, the method proceeds to step S7.
In step S7 an error due to invalid time information TIME_{RTC} supplied by the RTC is signalised to the user. A text message or sign may be displayed on a display of the mobile terminal, possibly accompanied by an acoustic signal. The user may be asked to input a new correct time value for the RTC.
If a new correct time value for the RTC has been inputted into the mobile terminal, the inventive method might proceed with step S5.
Otherwise the execution of the method might be finished.

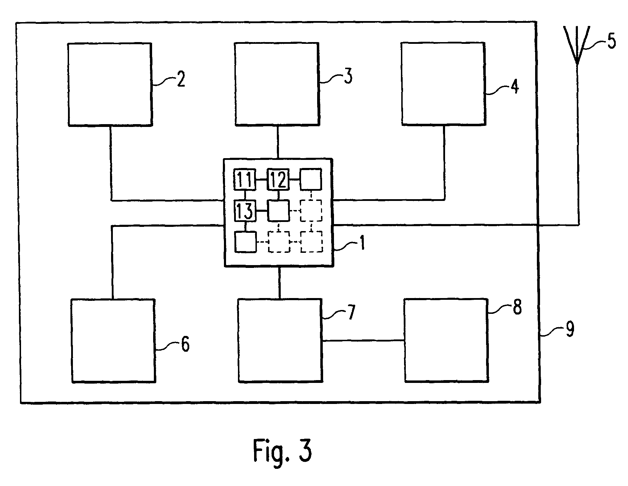

Figure 3 shows a block diagram of a mobile terminal 9 according to the present invention in which the above described method is implemented.

The mobile terminal 9 comprises a central unit 1, a mobile terminal supply battery 2, a keyboard 3, a display 4, an internal or external antenna 5, a non-volatile memory means (NVM) 6, a real time clock (RTC) 7 and a back up battery 8.

The mobile terminal supply battery 2, the keyboard 3, the display 4, the antenna 5, the non-volatile memory means 6 and the real time clock 7 are connected to the central unit 1. All the electrical components included in the mobile terminal are powered by the mobile terminal supply battery 2. Further, the real time clock 7 is backed up by the back up battery 8 connected thereto.

The central unit 1 comprises reading means 11 for reading the time information TIME_{NVM} stored in the non-volatile memory means 6, comparing means 12 for comparing the time information TIME_{NVM} read from the non-volatile memory means 6 with a present time information TIME_{RTC} output from the real time clock 7, deciding means 13 for deciding on the basis of the comparison result, whether the time information TIME_{RTC} supplied by the real time clock 7 is valid and further means for controlling the mobile terminal 9 including e.g. a microprocessor, receiving means and coding/decoding means. Said reading means 11, comparing means 12 and deciding means 13 may be included inter alia e.g. as software units in one common microcomputer being part of the central unit 1.

The mobile terminal 9 can be operated (and switched on/off) by using the keyboard 3. When the mobile terminal 9 is booted up the time information TIME_{NVM} stored in the non-volatile memory means 6 is read by the reading means 11.
Afterwards the time information TIME_{NVM} read by the reading means 11 is compared with the time information TIME_{RTC} supplied by the real time clock 7 by the comparing means 12.
Then the deciding means 13 decide according to the above explained rules whether the time information TIME_{RTC} supplied by the real time clock 7 has to be judged valid or invalid.

If the time information TIME_{RTC} supplied by the real time clock 7 is regarded as invalid by the deciding means 13, a text message or sign is displayed on the display 4 of the mobile terminal 9 and the user is asked to input a correct time value.

If the time information TIME_{RTC} supplied by the real time clock 7 is regarded as valid by the deciding means 13, the time information TIME_{RTC} of the real time clock 7 is periodically stored in the non-volatile memory means 6 by means of the central unit 1.

Advantageously the time information TIME_{RTC} of the real time clock 7 is additionally stored in the non-volatile memory means 6 before shutdown of the mobile terminal.

With a method and a mobile terminal capable of checking the plausibility of time information provided by a battery backed up real time clock in a mobile terminal according to the present invention, the plausibility of time information outputted from the real time clock is checked and thus wrong time information supplied by the real time clock due to both a loss of time information and an error is determined.

## Claims

1. A method of checking the plausibility of time information provided by a battery backed up real time clock (RTC) in a mobile terminal of a wireless telecommunication system in which a time information of the real time clock is stored in a non-volatile memory means (NVM) during operation of the mobile terminal, the method comprising the steps of:
- reading (S2) the time information stored in the non-volatile memory means;
- comparing (S3) the time information read from the non-volatile memory means with a present time information output from the real time clock; and
- deciding (S4) on the basis of the comparison result, whether the time information supplied by the real time clock is valid.

2. A method of checking the plausibility of time information provided by a real time clock according to claim 1, **characterized in**
**that** if the comparison result of said comparing step (S3) is that the time information read from the real time clock is smaller in value than the time information read from the non-volatile memory means, the time information supplied by the real time clock is regarded (S41) as invalid in said deciding step (S4).

3. A method of checking the plausibility of time information provided by a real time clock according to one of the claims 1 and 2, **characterized in**
**that** if the comparison result of said comparing step (S3) is that the time information read from the real time clock is larger in value than the sum of the time information read from the non-volatile memory means and a predetermined best case back up time, the time information supplied by the real time clock is regarded (S42) as invalid in said deciding step (S4).

4. A method of checking the plausibility of time information provided by a real time clock according to claim 3, **characterized in**
**that** the best case back up time is the time duration the real time clock drains a mobile terminal supply battery while the mobile terminal is in an off-state.

5. A method of checking the plausibility of time information provided by a real time clock according to one of the preceding claims, **characterized in**
**that**, if the time information supplied by the real time clock is regarded as invalid in said deciding step (S4), this fact is signalized (S7) to a user of the mobile terminal.

6. A method of checking the plausibility of time information provided by a real time clock according to one of the preceding claims, **characterized in**
**that** the time information of the real time clock is periodically stored in a non-volatile memory means during operation of the mobile terminal.

7. A method of checking the plausibility of time information provided by a real time clock according to one of the preceding claims, **characterized in**
**that** the time information of the real time clock is stored in a non-volatile memory means before shutdown of the mobile terminal.

8. A mobile terminal (9) of a wireless telecommunication system comprising
- a battery backed up real time clock (7) providing a time information which is stored in a non-volatile memory means (6) during operation of the mobile terminal,
- reading means (11) for reading the time information stored in the non-volatile memory means (6);
- comparing means (12) for comparing the time information read from the non-volatile memory means (6) with a present time information output from the real time clock (7); and
- deciding means (13) for deciding on the basis of the comparison result, whether the time information supplied by the real time clock (7) is valid.

9. A mobile terminal (9) according to claim 8, **characterized in**
**that** if the comparison result of said comparing means (12) is that the time information read from the real time clock (7) is smaller in value than the time information read from the non-volatile memory means (6), the time information supplied by the real time clock (7) is regarded as invalid by said deciding means (13).

10. A mobile terminal (9) according to one of the claims 8 and 9, **characterized in**
**that** if the comparison result of said comparing means (12) is that the time information read from the real time clock (7) is larger in value than the sum of the time information read from the non-volatile memory means (6) and a predetermined best case back up time, the time information supplied by the real time clock (7) is regarded as invalid by said deciding means (13).

11. A mobile terminal (9) according to claim 10, **characterized in**
**that** the best case back up time is the time duration the real time clock (7) drains a mobile terminal supply battery (2) while the mobile terminal (9) is in an off-state.

12. A mobile terminal (9) according to one of the claims 8 to 11, **characterized in that**, if the time information supplied by the real time clock (7) is regarded as invalid by said deciding means (13), this fact is signalized to a user of the mobile terminal.

13. A mobile terminal (9) according to one of the claims 8 to 12, **characterized in that** the time information of the real time clock (7) is periodically stored in a non-volatile memory means (6) during operation of the mobile terminal.

14. A mobile terminal (9) according to one of the claims 8 to 13, **characterized in that** the time information of the real time clock (7) is stored in a non-volatile memory means (6) before shutdown of the mobile terminal.
